(19) Europäisches Patentamt
European Patent Office
Office européen des brevets

(11) EP 3 738 663 A1

(12) EUROPEAN PATENT APPLICATION

(43) Date of publication:
18.11.2020  Bulletin 2020/47

(51) Int Cl.:
$B01D$ $53/94$ (2006.01)

(21) Application number: 20174590.8

(22) Date of filing: 14.05.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 14.05.2019  US 201962847501 P
15.05.2019  US 201962848174 P

(71) Applicant: Johnson Matthey Public Limited Company
London EC4A 4AB (GB)

(72) Inventors:
• CHANDLER, Guy
Royston, Hertfordshire SG8 5HE (GB)
• CLEETON, Jason
Royston, Hertfordshire SG8 5HE (GB)
• GIDNEY, Jeremy
Royston, Hertfordshire SG8 5HE (GB)
• ROBSON, Chris
Royston, Hertfordshire SG8 5HE (GB)

(74) Representative: Lenden, Philip
Johnson Matthey PLC
Gate 20
Orchard Road
Royston, Herts. SG8 5HE (GB)

(54) **EXHAUST SYSTEM INCLUDING PATICULATE FILTER WITH OXIDATION ZONE CAPABLE OF GENERATING NO2 UNDER LEAN CONDITIONS**

(57) Systems and methods of the present invention related to an exhaust gas purification system comprising: (a) a particulate filter including an inlet and an outlet with an axial length L therebetween, wherein the filter includes an oxidation catalyst capable of generating $NO_2$ under lean burn conditions; (b) an injector for injecting ammonia or a compound decomposable to ammonia into the exhaust gas, located downstream of the filter; and (c) a downstream catalyst comprising a selective catalytic reduction (SCR) catalyst, located downstream of the injector.

**Figure 1**

**Description**

BACKGROUND

Growing road traffic in Europe has resulted in detrimental effects on the environment and on public health, in spite of increasingly stringent emission standards. Carbon dioxide ($CO_2$) and noxious emissions may not be sufficiently reduced in real driving, whilst some engine technologies may have led to increases in the emissions of nanoparticles that are not detected by current certification procedures. The challenge is to demonstrate pollutant emissions levels compliant with the Euro 6 RDE limits and particle number emissions measured to a 10 nm size threshold while maintaining fuel efficiencies.

Lean-burn operation has been known to improve fuel economy since the earliest internal-combustion engines were developed. Enleanment can reduce both heat losses and pumping work depending on the operating condition. The direct-injection (DI) gasoline engines to enter mass production utilised lean-stratified operation. It should be appreciated that the reduction of $NO_x$ to $N_2$ using a three-way catalyst (TWC) is less efficient when the exhaust gas composition is lean of stoichiometric.

A three-way catalyst (TWC) typically contains one or more platinum group metals, particularly those selected from the group consisting of platinum, palladium and rhodium. TWCs are intended to catalyse three reactions simultaneously:

(i) oxidation of carbon monoxide to carbon dioxide,
(ii) oxidation of unburned hydrocarbons to carbon dioxide and water; and
(iii) reduction of nitrogen oxides to nitrogen and oxygen.

These three reactions occur most efficiently when the TWC receives exhaust gas from an engine running at or about the stoichiometric point. As is well known in the art, the quantity of carbon monoxide (CO), unburned hydrocarbons (HC) and nitrogen oxides ($NO_x$) emitted when gasoline fuel is combusted in a positive ignition (*e.g.* spark-ignited) internal combustion engine is influenced predominantly by the air-to-fuel ratio in the combustion cylinder. An exhaust gas having a stoichiometrically balanced composition is one in which the concentrations of oxidising gases ($NO_x$ and $O_2$) and reducing gases (HC and CO) are substantially matched. The air-to-fuel ratio that produces this stoichiometrically balanced exhaust gas composition is typically given as 14.7: 1.

Theoretically, it should be possible to achieve complete conversion of $O_2$, $NO_x$, CO and HC in a stoichiometrically balanced exhaust gas composition to $CO_2$, $H_2O$ and $N_2$ (and residual $O_2$) and this is the duty of the TWC. Ideally, therefore, the engine should be operated in such a way that the air-to-fuel ratio of the combustion mixture produces the stoichiometrically balanced exhaust gas composition.

A way of defining the compositional balance between oxidising gases and reducing gases of the exhaust gas is the lambda ($\lambda$) value of the exhaust gas, which can be defined according to equation (1) as:

$$\text{Actual engine air-to-fuel ratio/Stoichiometric engine air-to-fuel ratio,} \qquad (1)$$

wherein a lambda value of 1 represents a stoichiometrically balanced (or stoichiometric) exhaust gas composition, wherein a lambda value of >1 represents an excess of $O_2$ and $NO_x$ and the composition is described as "lean" and wherein a lambda value of <1 represents an excess of HC and CO and the composition is described as "rich". It is also common in the art to refer to the air-to-fuel ratio at which the engine operates as "stoichiometric", "lean" or "rich", depending on the exhaust gas composition which the air-to-fuel ratio generates: hence stoichiometrically-operated gasoline engine or lean-burn gasoline engine.

Thus, there are still needs to improve pollutant emissions aftertreatment under lean-burn conditions.

In addition, there are particulate emissions which need to be considered. Ambient PM is divided by most authors into the following categories based on their aerodynamic diameter (the aerodynamic diameter is defined as the diameter of a 1 $g/cm^3$ density sphere of the same settling velocity in air as the measured particle):

(i) PM-10 - particles of an aerodynamic diameter of less than 10 $\mu$m;
(ii) Fine particles of diameters below 2.5 $\mu$m (PM-2.5);
(iii) Ultrafine particles of diameters below 0.1 $\mu$m (or 100 nm); and
(iv) Nanoparticles, characterised by diameters of less than 50 nm.

Since the mid-1990's, particle size distributions of particulates exhausted from internal combustion engines have received increasing attention due to possible adverse health effects of fine and ultrafine particles. Concentrations of PM-10 particulates in ambient air are regulated by law in the USA. A new, additional ambient air quality standard for PM-2.5 was introduced in the USA in 1997 as a result of health studies that indicated a strong correlation between human mortality and the concentration of fine particles below 2.5 $\mu$m.

Interest has now shifted towards nanoparticles generated by diesel and gasoline engines because they are understood to penetrate more deeply into human lungs than particulates of greater size and consequently they are believed to be more harmful than larger particles, extrapolated from the findings of studies into particulates in the 2.5-10.0 $\mu$m range.

Size distributions of diesel particulates have a well-established bimodal character that correspond to the particle nucleation and agglomeration mechanisms. Diesel PM is composed of numerous small particles holding very little mass. Nearly all diesel particulates have sizes of significantly less than 1 $\mu$m, i.e. they comprise a mixture of fine, i.e. falling under the 1997 US law, ultrafine and nanoparticles.

It is understood that diesel particulate filters, such as ceramic wallflow monoliths, may work through a combination of depth and surface filtration: a filtration cake develops at higher soot loads when the depth filtration capacity is saturated and a particulate layer starts covering the filtration surface. Depth filtration is characterized by somewhat lower filtration efficiency and lower pressure drop than the cake filtration.

PM generated by positive ignition engines has a significantly higher proportion of ultrafine, with negligible accumulation and coarse mode compared with that produced by diesel (compression ignition) engines, and this presents challenges to removing it from positive ignition engine exhaust gas in order to prevent its emission to atmosphere. In particular, since a majority of PM derived from a positive ignition engine is relatively small compared with the size distribution for diesel PM, it is not practically possible to use a filter substrate that promotes positive ignition PM surface-type cake filtration because the relatively low mean pore size of the filter substrate that would be required would produce impractically high backpressure in the system.

Furthermore, generally it is not possible to use a conventional wallflow filter, designed for trapping diesel PM, for promoting surface-type filtration of PM from a positive ignition engine in order to meet relevant emission standards because there is generally less PM in positive ignition exhaust gas, so formation of a soot cake is less likely; and positive ignition exhaust gas temperatures are generally higher, which can lead to faster removal of PM by oxidation, thus preventing increased PM removal by cake filtration. Depth filtration of positive ignition PM in a conventional diesel wallflow filter is also difficult because the PM is significantly smaller than the pore size of the filter medium. Hence, in normal operation, an uncoated conventional diesel wallflow filter will have a lower filtration efficiency when used with a positive ignition engine than a compression ignition engine.

Emission legislation in Europe from 1st September 2014 (Euro 6) requires control of the number of particles emitted from both diesel and gasoline (positive ignition) passenger cars. For gasoline EU light duty vehicles the allowable limits are: 1000mg/km carbon monoxide; 60mg/km nitrogen oxides ($NO_x$); 100mg/km total hydrocarbons (of which $\leq$ 68mg/km are non-methane hydrocarbons); and 4.5mg/km particulate matter ((PM) for direct injection engines only). A PM number standard limit of $6.0 \times 10^{11}$ per km has been set for Euro 6. In a practical sense, the range of particulates that are legislated for are between 23 nm and 3 $\mu$m.

In the United States, on 22nd March 2012, the State of California Air Resources Board (CARB) adopted new Exhaust Standards from 2017 and subsequent model year "LEV III" passenger cars, light-duty trucks and medium-duty vehicles which include a 3mg/mile emission limit, with a later introduction of 1mg/mile possible, as long as various interim reviews deem it feasible.

The new Euro 6 emission standard presents a number of challenging design problems for meeting gasoline emission standards. In particular, how to design a filter, or an exhaust system including a filter, for reducing the number of PM gasoline (positive ignition) emissions, yet at the same time meeting the emission standards for non-PM pollutants such as one or more of oxides of nitrogen ($NO_x$), carbon monoxide (CO) and unburned hydrocarbons (HC), all at an acceptable back pressure, e.g. as measured by maximum on-cycle backpressure on the EU drive cycle.

Accordingly, it is an object to provide an improved exhaust gas treatment system tackling the disadvantages of the prior art, or at least to provide a commercially useful alternative thereto. More specifically, it is an object to provide an exhaust gas treatment system that enables treatment of exhaust gas to demonstrate pollutant emissions levels compliant with the Euro 6 RDE limits and particle number emissions measured to a 10 nm size threshold while maintaining fuel efficiencies under lean burn conditions.

SUMMARY OF THE INVENTION

One aspect of the present invention is directed to a system for treating exhaust gas from a lean-burn combustion engine comprising: (a) a particulate filter including an inlet and an outlet with an axial length L therebetween, wherein the filter includes an oxidation catalyst capable of generating $NO_2$ under lean burn conditions; (b) an injector for injecting ammonia or a compound decomposable to ammonia into the exhaust gas, located downstream of the filter; and (c) a downstream catalyst comprising a selective catalytic reduction (SCR) catalyst, located downstream of the injector.

Another aspect of the present invention is directed to a method of purifying exhaust gas from a lean burn combustion engine, comprising: (a) passing the exhaust gas through a particulate filter including an inlet and an outlet with an axial length L therebetween, wherein the filter includes an oxidation catalyst capable of generating $NO_2$ under lean burn conditions; (b) adding ammonia or a compound decomposable into ammonia into the exhaust gas by an injector, located downstream of the filter; and (c) passing the exhaust gas through a downstream catalyst comprising a selective reduction catalyst, located downstream of the injector.

BRIEF DESCRIPTION OF THE DRAWINGS

**Figure 1** shows filtration efficiency summary of GPFs 1-3 at different particle size ranges measured over WLTC.

**Figure 2** shows filter backpressure for GPFs 1-3 as a function of soot load.

**Figure 3** shows $NO_2$-make functionality of Catalysts 1-3 at different temperatures.

**Figure 4** shows vehicle filtration efficiency (WLTC) of GPF 4.

**Figure 5** shows $NO_2$-make functionality of GPF 4 vs GPF 3.

DETAILED DESCRIPTION OF THE INVENTION

Systems and methods of the present invention relate to purification of an exhaust gas from a lean burn internal combustion engine. The invention is particularly directed to cleaning of an exhaust gas from a lean burn direct-injection gasoline engine.

Systems and methods of the present invention may include: (1) a particulate filter including an inlet and an outlet with an axial length L therebetween, wherein the filter includes an oxidation catalyst capable of generating $NO_2$ under lean burn conditions; (2) an injector for injecting ammonia or a compound decomposable to ammonia into the exhaust gas, located downstream of the filter; and (3) a downstream catalyst comprising a selective catalytic reduction (SCR) catalyst, located downstream of the injector. The oxidation catalyst may be located, for example, on the outlet side of the particulate filter. In some embodiments, the filter may further comprise a three-way catalyst (TWC) or a lean NOx trap (LNT) catalyst. In further embodiments, the TWC or the LNT catalyst can be coated on the inlet of the filter. In some embodiments, such system may include an upstream catalyst located upstream of the particulate filter, the upstream catalyst comprising a second three-way catalyst, a $NO_x$ storage catalyst, a three-way $NO_x$ trap (TWLNT) catalyst, or combinations thereof.

Configurations of the system of the present invention have been found to provide lower overall tailpipe emissions. Including an oxidation catalyst on the particulate filter may provide a benefit by making $NO_2$ to optimize the performance of the downstream SCR catalyst. It has also been found that the inclusion of the reductant injector is necessary to realize these benefits, in order to supply the reductant necessary for the SCR reaction on the downstream SCR catalyst.

Details of the system components, configurations, and benefits are described in further detail herein.

<u>Filter</u>

Systems of the present invention include a particulate filter comprising an oxidation catalyst. In some embodiments, the oxidation catalyst can be coated on the outlet of the filter. In further embodiments, the oxidation catalyst can be coated extending from the outlet end for at least 50% of L.

In some embodiments, the particulate filter can further comprise a three-way catalyst (TWC) or a lean $NO_x$ trap (LNT) catalyst. In further embodiments, the TWC or the LNT catalyst can be coated on the inlet of the filter. In another further embodiments, the TWC or the LNT catalyst can be coated extending from the inlet for at least 50% of L. In certain embodiments, the oxidation catalyst and the TWC or the LNT catalyst compositions can overlap by at most 80% of L. Preferably such overlap is at most 20% of L and more preferably is at most 10% of L.

In some embodiments, the particulate filter including the oxidation catalyst may be formulated and configured to provide a desired $NO_2/NO_x$ ratio in order to optimize the SCR reaction over the downstream SCR catalyst.

The particulate filter can be a wall flow filter. And wall flow filters are well known in the art and typically comprise a ceramic porous filter substrate having a plurality of inlet channels and a plurality of outlet channels, wherein each inlet channel and each outlet channel is defined in part by a ceramic wall of porous structure, wherein each inlet channel is separated from an outlet channel by a ceramic wall of porous structure.

Typical lengths L are from 2-12 inches long (5.1-30.5 cm), preferably 3-6 inches (7.6-15.2 cm) long. Cross sections are preferably circular and may typically have 4.66 and 5.66 inch (11.8 cm and 14.4cm) diameter filters. However, cross-section can also be dictated by space on a vehicle into which the filter is required to fit.

The substrate can be a ceramic, e.g. silicon carbide, cordierite, aluminium nitride, silicon nitride, aluminium titanate, alumina, mullite eg., acicular mullite (see eg. WO 01/16050), pollucite, a thermet such as $Al_2O_3$/Fe, or composites comprising segments of any two or more thereof. In embodiments wherein the catalyst article of the present comprises a ceramic substrate, the ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

It will be understood that a benefit of filters for use in the invention is substantially independent of the porosity of the substrate. Porosity is a measure of the percentage of void space in a porous substrate and is related to backpressure in an exhaust system: generally, the lower the porosity, the higher the backpressure. However, the porosity of filters for use in the present invention are typically >40% or >50% and porosities of 45-75% such as 50-65% or 55-60% can advantageously be used.

The mean pore size of the washcoated porous substrate is important for filtration. So, it is possible to have a porous substrate of relatively high porosity that is a poor filter because the mean pore size is also relatively high. The mean pore size of surface pores of the porous structure of the porous filter substrate can be from 8 to 45 $\mu$m, for example 8 to 25 $\mu$m, 10 to 20 $\mu$m or 10 to 15 $\mu$m. The characteristics of substrates, such as pore size, are well known in the art and appropriate measurement techniques are known to the person skilled in the art.

SCR Catalyst

Systems of the present invention may include one or more SCR catalyst. The system includes an SCR catalyst positioned downstream of the particulate filter. Systems of the present invention may also include one or more additional SCR catalysts.

The exhaust system of the invention may include an SCR catalyst which is positioned downstream of an injector for introducing ammonia or a compound decomposable to ammonia into the exhaust gas. The SCR catalyst may be positioned directly downstream of the injector for injecting ammonia or a compound decomposable to ammonia (e.g. there is no intervening catalyst between the injector and the SCR catalyst).

The SCR catalyst includes a substrate and a catalyst composition. The substrate may be a flow-through substrate or a filtering substrate. When the SCR catalyst has a flow-through substrate, then the substrate may comprise the SCR catalyst composition (i.e. the SCR catalyst is obtained by extrusion) or the SCR catalyst composition may be disposed or supported on the substrate (i.e. the SCR catalyst composition is applied onto the substrate by a washcoating method).

When the SCR catalyst has a filtering substrate, then it is a selective catalytic reduction filter catalyst, which is referred to herein by the abbreviation "SCRF™ catalyst". The SCRF™ catalyst comprises a filtering substrate and the selective catalytic reduction (SCR) composition. References to use of SCR catalysts throughout this application are understood to include use of SCRF™ catalysts as well, where applicable.

The selective catalytic reduction composition may comprise, or consist essentially of, a metal oxide based SCR catalyst formulation, a molecular sieve based SCR catalyst formulation, or mixture thereof. Such SCR catalyst formulations are known in the art.

The selective catalytic reduction composition may comprise, or consist essentially of, a metal oxide based SCR catalyst formulation. The metal oxide based SCR catalyst formulation comprises vanadium or tungsten or a mixture thereof supported on a refractory oxide. The refractory oxide may be selected from the group consisting of alumina, silica, titania, zirconia, ceria and combinations thereof.

The metal oxide based SCR catalyst formulation may comprise, or consist essentially of, an oxide of vanadium (e.g. $V_2O_5$) and/or an oxide of tungsten (e.g. $WO_3$) supported on a refractory oxide selected from the group consisting of titania (e.g. $TiO_2$), ceria (e.g. $CeO_2$), and a mixed or composite oxide of cerium and zirconium (e.g. $Ce_xZr_{(1-x)}O_2$, wherein x = 0.1 to 0.9, preferably x = 0.2 to 0.5).

When the refractory oxide is titania (e.g. $TiO_2$), then preferably the concentration of the oxide of vanadium is from 0.5 to 6 wt% (e.g. of the metal oxide based SCR formulation) and/or the concentration of the oxide of tungsten (e.g. $WO_3$) is from 5 to 20 wt%. More preferably, the oxide of vanadium (e.g. $V_2O_5$) and the oxide of tungsten (e.g. $WO_3$) are supported on titania (e.g. $TiO_2$).

When the refractory oxide is ceria (e.g. $CeO_2$), then preferably the concentration of the oxide of vanadium is from 0.1 to 9 wt% (e.g. of the metal oxide based SCR formulation) and/or the concentration of the oxide of tungsten (e.g. $WO_3$) is from 0.1 to 9 wt%.

The metal oxide based SCR catalyst formulation may comprise, or consist essentially of, an oxide of vanadium (e.g. $V_2O_5$) and optionally an oxide of tungsten (e.g. $WO_3$), supported on titania (e.g. $TiO_2$).

The selective catalytic reduction composition may comprise, or consist essentially of, a molecular sieve based SCR catalyst formulation. The molecular sieve based SCR catalyst formulation comprises a molecular sieve, which is optionally a transition metal exchanged molecular sieve. It is preferable that the SCR catalyst formulation comprises a transition metal exchanged molecular sieve.

In general, the molecular sieve based SCR catalyst formulation may comprise a molecular sieve having an aluminosilicate framework (e.g. zeolite), an aluminophosphate framework (e.g. AlPO), a silicoaluminophosphate framework (e.g. SAPO), a heteroatom-containing aluminosilicate framework, a heteroatom-containing aluminophosphate framework (e.g. MeAlPO, where Me is a metal), or a heteroatom-containing silicoaluminophosphate framework (e.g. MeAPSO, where Me is a metal). The heteroatom (i.e. in a heteroatom-containing framework) may be selected from the group consisting of boron (B), gallium (Ga), titanium (Ti), zirconium (Zr), zinc (Zn), iron (Fe), copper (Cu), vanadium (V) and combinations of any two or more thereof. It is preferred that the heteroatom is a metal (e.g. each of the above heteroatom-containing frameworks may be a metal-containing framework).

It is preferable that the molecular sieve based SCR catalyst formulation comprises, or consist essentially of, a molecular sieve having an aluminosilicate framework (e.g. zeolite) or a silicoaluminophosphate framework (e.g. SAPO).

When the molecular sieve has an aluminosilicate framework (e.g. the molecular sieve is a zeolite), then typically the molecular sieve has a silica to alumina molar ratio (SAR) of from 5 to 200 (e.g. 10 to 200), preferably 10 to 100 (e.g. 10 to 30 or 20 to 80), such as 12 to 40, more preferably 15 to 30.

Typically, the molecular sieve is microporous. A microporous molecular sieve has pores with a diameter of less than 2 nm (e.g. in accordance with the IUPAC definition of "microporous" [see Pure & Appl. Chem., 66(8), (1994), 1739-1758)]).

The molecular sieve based SCR catalyst formulation may comprise a small pore molecular sieve (e.g. a molecular sieve having a maximum ring size of eight tetrahedral atoms), a medium pore molecular sieve (e.g. a molecular sieve having a maximum ring size of ten tetrahedral atoms) or a large pore molecular sieve (e.g. a molecular sieve having a maximum ring size of twelve tetrahedral atoms) or a combination of two or more thereof.

When the molecular sieve is a small pore molecular sieve, then the small pore molecular sieve may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or an intergrowth of two or more thereof. Preferably, the small pore molecular sieve has a framework structure represented by a FTC selected from the group consisting of CHA, LEV, AEI, AFX, ERI, LTA, SFW, KFI, DDR and ITE. More preferably, the small pore molecular sieve has a framework structure represented by a FTC selected from the group consisting of CHA and AEI. The small pore molecular sieve may have a framework structure represented by the FTC CHA. The small pore molecular sieve may have a framework structure represented by the FTC AEI. When the small pore molecular sieve is a zeolite and has a framework represented by the FTC CHA, then the zeolite may be chabazite.

When the molecular sieve is a medium pore molecular sieve, then the medium pore molecular sieve may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, -PAR, PCR, PON, PUN, RRO, RSN, SFF, SFG, STF, STI, STT, STW, -SVR, SZR, TER, TON, TUN, UOS, VSV, WEI and WEN, or a mixture and/or an intergrowth of two or more thereof. Preferably, the medium pore molecular sieve has a framework structure represented by a FTC selected from the group consisting of FER, MEL, MFI, and STT. More preferably, the medium pore molecular sieve has a framework structure represented by a FTC selected from the group consisting of FER and MFI, particularly MFI. When the medium pore molecular sieve is a zeolite and has a framework represented by the FTC FER or MFI, then the zeolite may be ferrierite, silicalite or ZSM-5.

When the molecular sieve is a large pore molecular sieve, then the large pore molecular sieve may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. Preferably, the large pore molecular sieve has a framework structure represented by a FTC selected from the group consisting of AFI, BEA, MAZ, MOR, and OFF. More preferably, the large pore molecular sieve has a framework structure represented by a FTC selected from the group consisting of BEA, MOR and MFI. When the large pore molecular sieve is a zeolite and has a framework represented by the FTC BEA, FAU or MOR, then the zeolite may be a beta zeolite, faujasite, zeolite Y, zeolite X or mordenite.

In general, it is preferred that the molecular sieve is a small pore molecular sieve.

The molecular sieve based SCR catalyst formulation preferably comprises a transition metal exchanged molecular sieve. The transition metal may be selected from the group consisting of cobalt, copper, iron, manganese, nickel, palladium, platinum, ruthenium and rhenium.

The transition metal may be copper, iron, or manganese; preferably, copper or iron; more preferably, iron. Advantages of SCR catalyst formulations containing an iron exchanged molecular sieve are that such formulations have higher durability under environments with little or no oxygen present (as will be the case under stoichiometric operation) and low selectivity towards forming nitrous oxide ($N_2O$). Systems and method of the present invention may include any type of SCR catalyst, however, Fe-SCR catalyst formulations may include, for example, Fe exchanged SAPO-34, Fe exchanged CHA zeolite, Fe exchanged AEI zeolites, or combinations thereof.

The transition metal may be present on an extra-framework site on the external surface of the molecular sieve or within a channel, cavity or cage of the molecular sieve.

Typically, the transition metal exchanged molecular sieve comprises an amount of 0.10 to 10 % by weight of the transition metal exchanged molecular, preferably an amount of 0.2 to 5 % by weight.

In general, the selective catalytic reduction catalyst comprises the selective catalytic reduction composition in a total concentration of 0.5 to 4.0 g in$^{-3}$, preferably 1.0 to 3.0 g in$^{-3}$.

The SCR catalyst composition may comprise a mixture of a metal oxide based SCR catalyst formulation and a molecular sieve based SCR catalyst formulation. The (a) metal oxide based SCR catalyst formulation may comprise, or consist essentially of, an oxide of vanadium (e.g. $V_2O_5$) and optionally an oxide of tungsten (e.g. $WO_3$), supported on titania (e.g. $TiO_2$) and (b) the molecular sieve based SCR catalyst formulation may comprise a transition metal exchanged molecular sieve.

When the SCR catalyst is an SCRF™ catalyst, then the filtering substrate may preferably be a wall flow filter substrate monolith, such as described herein in relation to a catalyzed soot filter. The wall flow filter substrate monolith (e.g. of the GPF) typically has a cell density of 60 to 400 cells per square inch (cpsi). It is preferred that the wall flow filter substrate monolith has a cell density of 100 to 350 cpsi, more preferably 200 to 300 cpsi.

The wall flow filter substrate monolith may have a wall thickness (e.g. average internal wall thickness) of 0.20 to 0.50 mm, preferably 0.25 to 0.35 mm (e.g. about 0.30 mm).

Generally, the uncoated wall flow filter substrate monolith has a porosity of from 50 to 80 %, preferably 55 to 75 %, and more preferably 60 to 70 %.

The uncoated wall flow filter substrate monolith typically has a mean pore size of at least 5 $\mu$m. It is preferred that the mean pore size is from 10 to 40 $\mu$m, such as 15 to 35 $\mu$m, more preferably 20 to 30 $\mu$m.

The wall flow filter substrate may have a symmetric cell design or an asymmetric cell design.

In general for an SCRF™ catalyst, the selective catalytic reduction composition is disposed within the wall of the wall-flow filter substrate monolith. Additionally, the selective catalytic reduction composition may be disposed on the walls of the inlet channels and/or on the walls of the outlet channels.

Oxidation Catalyst

Systems of the present invention may include a filter including an oxidation catalyst. In some embodiments, the oxidation catalyst is coated on the outlet of the filter. The oxidation catalyst may be 1) coated on the filter such that it is positioned on the surface of the walls, inlet or outlet, 2) coated on the porous walls such that it permeates the filter, i.e., it is positioned within the filter; or 3) coated so that it is both within the porous filter walls and on the surface of the walls.

In some embodiments, the oxidation catalyst includes one or more platinum group metals. In further embodiments, the oxidation catalyst can comprise Pt, Pd, or a combination thereof. In some embodiments, the oxidation catalyst is formulated with a focus on oxidizing NO into $NO_2$; this may obtain a more favorable $NO_2:NO_x$ ratio for the downstream SCR reaction.

Three-Way Catalyst

Systems of the present invention may include one or more three-way catalysts (TWC). The TWC typically comprises one or more platinum group metals (PGM) provided on a high surface area support (i.e. the inorganic oxide), together with an oxygen storage component (OSC) which typically comprises ceria. TWC compositions are generally provided in washcoats onto the substrate.

An OSC is an entity that has multi-valence state and can actively react with oxidants such as oxygen or nitrogen oxides under oxidative conditions, or reacts with reductants such as carbon monoxide (CO) or hydrogen under reducing conditions. Examples of suitable oxygen storage components include ceria. Praseodymia can also be included as an OSC. Delivery of an OSC to the washcoat layer can be achieved by the use of, for example, mixed oxides. For example, ceria can be delivered by a mixed oxide of cerium and zirconium, and/or a mixed oxide of cerium, zirconium, and neodymium. Preferably, the OSC comprises or consists of one or more mixed oxides. The OSC can be ceria or a mixed oxide comprising ceria. The OSC may comprise a ceria and zirconia mixed oxide; a mixed oxide of cerium, zirconium, and neodymium; a mixed oxide of praseodymium and zirconium; a mixed oxide of cerium, zirconium and praseodymium;

or a mixed oxide of praseodymium, cerium, lanthanum, yttrium, zirconium and neodymium. Preferably the OSC is selected from the group consisting of cerium oxide, a ceria-zirconia mixed oxide, and an alumina-ceria-zirconia mixed oxide. The ceria-zirconia mixed oxide can have a molar ratio of zirconia to ceria at least 50:50, preferably, higher than 60:40.

Preferably the particulate inorganic oxide is selected from the group consisting of alumina, magnesia, silica, lanthanum, neodymium, praseodymium, yttrium oxides, and mixed oxides or composite oxides thereof. Preferably the particulate inorganic oxide, which may be provided as a support for PGMs, is independently selected from the group consisting of alumina, silica-alumina, alumino-silicates, alumina-zirconia, and alumina-ceria. Preferably the particulate inorganic oxide has a surface area of at least $80 m^2/g$, more preferably at least $150 m^2/g$ and most preferably at least $200 m^2/g$.

Preferably the PGM component is selected from the group consisting of platinum, palladium, rhodium, and a mixture thereof. The TWC may comprise $1-200 g/ft^3$ of the PGM component.

Preferably the TWC further comprises a first alkali or alkali earth metal component, preferably wherein the first alkali or alkali earth metal is barium or strontium. Preferably the barium or strontium, where present, is present in an amount of 0.1 to 15 weight percent, and more preferably 3 to 10 weight percent barium, based on the total weight of the TWC. Preferably the barium is present as a $BaCO_3$ composite material. Such a material can be performed by any method known in the art, for example incipient wetness impregnation or spray-drying. Alternatively, barium hydroxide can be used in the catalyst article.

The catalyst article of the invention may comprise further components that are known to the skilled person. For example, the compositions of the invention may further comprise at least one binder and/or at least one surfactant. Where a binder is present, dispersible alumina binders are preferred.

NO$_x$ Traps

Systems of the present invention may include one or more NO$_x$ traps. NO$_x$ traps are devices that adsorb NO$_x$ under lean exhaust conditions, release the adsorbed NO$_x$ under rich conditions, and reduce the released NOx to form $N_2$.

A NO$_x$ trap of embodiments of the present invention may include a NO$_x$ adsorbent for the storage of NO$_x$ and an oxidation/reduction catalyst. Typically, nitric oxide reacts with oxygen to produce $NO_2$ in the presence of the oxidation catalyst. Second, the $NO_2$ is adsorbed by the NO$_x$ adsorbent in the form of an inorganic nitrate (for example, BaO or $BaCO_3$ is converted to $Ba(NO_3)_2$ on the NO$_x$ adsorbent). Lastly, when the engine runs under rich conditions, the stored inorganic nitrates decompose to form NO or $NO_2$ which are then reduced to form $N_2$ by reaction with carbon monoxide, hydrogen, and/or hydrocarbons (or via NH$_x$ or NCO intermediates) in the presence of the reduction catalyst. Typically, the nitrogen oxides are converted to nitrogen, carbon dioxide, and water in the presence of heat, carbon monoxide, and hydrocarbons in the exhaust stream.

The NO$_x$ adsorbent component is preferably an alkaline earth metal (such as Ba, Ca, Sr, and Mg), an alkali metal (such as K, Na, Li, and Cs), a rare earth metal (such as La, Y, Pr, and Nd), or combinations thereof. These metals are typically found in the form of oxides. The oxidation/reduction catalyst may include one or more noble metals. Suitable noble metals may include platinum, palladium, and/or rhodium. Preferably, platinum is included to perform the oxidation function and rhodium is included to perform the reduction function. The oxidation/reduction catalyst and the NO$_x$ adsorbent may be loaded on a support material such as an inorganic oxide for use in the exhaust system.

Electrically-Heated Catalyst (EHC)

Systems of the present invention may include one or more EHCs. In some embodiments, the upstream catalyst can be coated onto an EHC. Usually, the catalyst in the purification device is gradually heated by the exhaust gas and reaches the activating temperature after the engine starts. However, when the temperature of the engine is low, for example, after a cold start of the engine, it may take a long time to heat the catalyst to the activating temperature because the heat of the exhaust gas may be removed by the cold wall of the exhaust passage before it reaches the converter. Therefore, in a cold start of the engine, the exhaust gas of the engine may not be sufficiently purified because the temperature of the catalyst is lower than the activating temperature.

One approach to earlier heating of the exhaust gas is to include an electric heating system. Current systems using electrical energy are often combined within the substrate supporting an oxidation coating, known as electrically heated catalysts (EHCs). This type of system heats up the catalyst, enabling it to convert high levels of hydrocarbon/diesel fuel and carbon monoxide at low inlet exhaust temperatures with the resultant exotherm convecting downstream, enabling earlier SCR or SCRF catalyst performance. The heating element is usually at the front of the substrate.

Reductant/Urea Injector

As described herein, systems of the present invention may include at least one reductant injector. The system may include a means for introducing a nitrogenous reductant into the exhaust system upstream of the SCR and/or SCRF™ catalyst. It may be preferred that the means for introducing a nitrogenous reductant into the exhaust system is directly upstream of the SCR or SCRF™ catalyst (e.g. there is no intervening catalyst between the means for introducing a nitrogenous reductant and the SCR or SCRF™ catalyst).

The reductant is added to the flowing exhaust gas by any suitable means for introducing the reductant into the exhaust gas. Suitable means include an injector, sprayer, or feeder. Such means are well known in the art.

The nitrogenous reductant for use in the system can be ammonia per se, hydrazine, or an ammonia precursor selected from the group consisting of urea, ammonium carbonate, ammonium carbamate, ammonium hydrogen carbonate, and ammonium formate. Urea is particularly preferred.

The exhaust system may also comprise a means for controlling the introduction of reductant into the exhaust gas in order to reduce $NO_x$ therein. Preferred control means may include an electronic control unit, optionally an engine control unit, and may additionally comprise a $NO_x$ sensor located downstream of the NO reduction catalyst.

Substrate

Catalysts and adsorbers of the present invention may each further comprise a flow-through substrate or filter substrate. In one embodiment, the catalyst/adsorber may be coated onto the flow-through or filter substrate, and preferably deposited on the flow-through or filter substrate using a washcoat procedure.

The flow-through or filter substrate is a substrate that is capable of containing catalyst/adsorber components. The substrate is preferably a ceramic substrate or a metallic substrate. The ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates, metallo aluminosilicates (such as cordierite and spudomene), or a mixture or mixed oxide of any two or more thereof. Cordierite, a magnesium aluminosilicate, and silicon carbide are particularly preferred.

The metallic substrates may be made of any suitable metal, and in particular heat-resistant metals and metal alloys such as titanium and stainless steel as well as ferritic alloys containing iron, nickel, chromium, and/or aluminum in addition to other trace metals.

The flow-through substrate is preferably a flow-through monolith having a honeycomb structure with many small, parallel thin-walled channels running axially through the substrate and extending throughout from an inlet or an outlet of the substrate. The channel cross-section of the substrate may be any shape, but is preferably square, sinusoidal, triangular, rectangular, hexagonal, trapezoidal, circular, or oval. The flow-through substrate may also be high porosity which allows the catalyst to penetrate into the substrate walls.

The filter substrate is preferably a wall-flow monolith filter. The channels of a wall-flow filter are alternately blocked, which allow the exhaust gas stream to enter a channel from the inlet, then flow through the channel walls, and exit the filter from a different channel leading to the outlet. Particulates in the exhaust gas stream are thus trapped in the filter.

The catalyst/adsorber may be added to the flow-through or filter substrate by any known means, such as a washcoat procedure.

Upstream Catalyst

Systems of the present invention may include an upstream catalyst, located upstream of the filter including the oxidation catalyst. In some embodiments, the upstream catalyst may comprise a second three-way catalyst, a $NO_x$ storage catalyst, a three-way $NO_x$ trap (TWLNT) catalyst, or combinations thereof. The TWLNT catalyst is effective to provide both lean $NO_x$ trap functionality and three-way conversion functionality.

$NO_x$ Storage Catalyst

Systems of the present invention may include one or more $NO_x$ storage catalysts. $NO_x$ storage catalysts may include devices that adsorb, release, and/or reduce $NO_x$ according to certain conditions, generally dependent on temperature and/or rich/lean exhaust conditions. $NO_x$ storage catalysts may include, for example, passive $NO_x$ adsorbers, cold start catalysts, $NO_x$ traps, and the like.

Passive NO$_x$ Adsorber

Systems of the present invention may include one or more passive NO$_x$ adsorbers. A passive NO$_x$ adsorber is a device that is effective to adsorb NO$_x$ at or below a low temperature and release the adsorbed NO$_x$ at temperatures above the low temperature. A passive NO$_x$ adsorber may comprise a noble metal and a small pore molecular sieve. The noble metal is preferably palladium, platinum, rhodium, gold, silver, iridium, ruthenium, osmium, or mixtures thereof. Preferably, the low temperature is about 200°C, about 250°C, or between about 200°C to about 250°C. An example of a suitable passive NO$_x$ adsorber is described in U.S. Patent Publication No. 20150158019, which is incorporated by reference herein in its entirety.

The small pore molecular sieve may be any natural or a synthetic molecular sieve, including zeolites, and is preferably composed of aluminum, silicon, and/or phosphorus. The molecular sieves typically have a three-dimensional arrangement of $SiO_4$, $AlO_4$, and/or $PO_4$ that are joined by the sharing of oxygen atoms, but may also be two-dimensional structures as well. The molecular sieve frameworks are typically anionic, which are counterbalanced by charge compensating cations, typically alkali and alkaline earth elements (e.g., Na, K, Mg, Ca, Sr, and Ba), ammonium ions, and also protons. Other metals (e.g., Fe, Ti, and Ga) may be incorporated into the framework of the small pore molecular sieve to produce a metal-incorporated molecular sieve.

Preferably, the small pore molecular sieve is selected from an aluminosilicate molecular sieve, a metal-substituted aluminosilicate molecular sieve, an aluminophosphate molecular sieve, or a metal-substituted aluminophosphate molecular sieve. More preferably, the small pore molecular sieve is a molecular sieve having the Framework Type of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG, and ZON, as well as mixtures or intergrowths of any two or more. Particularly preferred intergrowths of the small pore molecular sieves include KFI-SIV, ITE-RTH, AEW-UEI, AEI-CHA, and AEI-SAV. Most preferably, the small pore molecular sieve is AEI or CHA, or an AEI-CHA intergrowth.

A suitable passive NO$_x$ adsorber may be prepared by any known means. For instance, the noble metal may be added to the small pore molecular sieve to form the passive NO$_x$ adsorber by any known means. For example, a noble metal compound (such as palladium nitrate) may be supported on the molecular sieve by impregnation, adsorption, ion-exchange, incipient wetness, precipitation, or the like. Other metals may also be added to the passive NO$_x$ adsorber. Preferably, some of the noble metal (more than 1 percent of the total noble metal added) in the passive NO$_x$ adsorber is located inside the pores of the small pore molecular sieve. More preferably, more than 5 percent of the total amount of noble metal is located inside the pores of the small pore molecular sieve; and even more preferably may be greater than 10 percent or greater than 25% or greater than 50 percent of the total amount of noble metal that is located inside the pores of the small pore molecular sieve.

Preferably, the passive NO$_x$ adsorber further comprises a flow-through substrate or filter substrate. The passive NO$_x$ adsorber is coated onto the flow-through or filter substrate, and preferably deposited on the flow-through or filter substrate using a washcoat procedure to produce a passive NO$_x$ adsorber system.

Cold Start Catalyst

Systems of the present invention may include one or more cold start catalysts. A cold start catalyst is a device that is effective to adsorb NO$_x$ and hydrocarbons (HC) at or below a low temperature and to convert and release the adsorbed NO$_x$ and HC at temperatures above the low temperature. Preferably, the low temperature is about 200°C, about 250°C, or between about 200°C to about 250°C. An example of a suitable cold start catalyst is described in WO 2015085300, which is incorporated by reference herein in its entirety.

A cold start catalyst may comprise a molecular sieve catalyst and a supported platinum group metal catalyst. The molecular sieve catalyst may include or consist essentially of a noble metal and a molecular sieve. The supported platinum group metal catalyst comprises one or more platinum group metals and one or more inorganic oxide carriers. The noble metal is preferably palladium, platinum, rhodium, gold, silver, iridium, ruthenium, osmium, or mixtures thereof.

The molecular sieve may be any natural or a synthetic molecular sieve, including zeolites, and is preferably composed of aluminum, silicon, and/or phosphorus. The molecular sieves typically have a three-dimensional arrangement of $SiO_4$, $AlO_4$, and/or $PO_4$ that are joined by the sharing of oxygen atoms, but may also be two-dimensional structures as well. The molecular sieve frameworks are typically anionic, which are counterbalanced by charge compensating cations, typically alkali and alkaline earth elements (e.g., Na, K, Mg, Ca, Sr, and Ba), ammonium ions, and also protons.

The molecular sieve may preferably be a small pore molecular sieve having a maximum ring size of eight tetrahedral atoms, a medium pore molecular sieve having a maximum ring size of ten tetrahedral atoms, or a large pore molecular sieve having a maximum ring size of twelve tetrahedral atoms. More preferably, the molecular sieve has a framework structure of AEI, MFI, EMT, ERI, MOR, FER, BEA, FAU, CHA, LEV, MWW, CON, EUO, or mixtures thereof.

The supported platinum group metal catalyst comprises one or more platinum group metals ("PGM") and one or more inorganic oxide carriers. The PGM may be platinum, palladium, rhodium, iridium, or combinations thereof, and most preferably platinum and/or palladium. The inorganic oxide carriers most commonly include oxides of Groups 2, 3, 4, 5, 13 and 14 elements. Useful inorganic oxide carriers preferably have surface areas in the range 10 to 700 $m^2$/g, pore volumes in the range 0.1 to 4 mL/g, and pore diameters from about 10 to 1000 Angstroms. The inorganic oxide carrier is preferably alumina, silica, titania, zirconia, ceria, niobia, tantalum oxides, molybdenum oxides, tungsten oxides, or mixed oxides or composite oxides of any two or more thereof, e.g. silica-alumina, ceria-zirconia or alumina-ceria-zirconia. Alumina and ceria are particularly preferred.

The supported platinum group metal catalyst may be prepared by any known means. Preferably, the one or more platinum group metals are loaded onto the one or more inorganic oxides by any known means to form the supported PGM catalyst, the manner of addition is not considered to be particularly critical. For example, a platinum compound (such as platinum nitrate) may be supported on an inorganic oxide by impregnation, adsorption, ion-exchange, incipient wetness, precipitation, or the like. Other metals, such as iron, manganese, cobalt and barium, may also be added to the supported PGM catalyst.

A cold start catalyst of the present invention may be prepared by processes well known in the art. The molecular sieve catalyst and the supported platinum group metal catalyst may be physically mixed to produce the cold start catalyst. Preferably, the cold start catalyst further comprises a flow-through substrate or filter substrate. In one embodiment, the molecular sieve catalyst and the supported platinum group metal catalyst are coated onto the flow-through or filter substrate, and preferably deposited on the flow-through or filter substrate using a washcoat procedure to produce a cold start catalyst system.

Filters

Systems of the present invention may include one or more particulate filters, in addition to the filter including the oxidation catalyst, as described above. Particulate filters are devices that reduce particulates from the exhaust of internal combustion engines. Particulate filters include catalyzed particulate filters and bare (non-catalyzed) particulate filters. Catalyzed particulate filters, also called catalyzed soot filters, (for diesel and gasoline applications) include metal and metal oxide components (such as Pt, Pd, Fe, Mn, Cu, and ceria) to oxidize hydrocarbons and carbon monoxide in addition to destroying soot trapped by the filter.

Fuel Injector

Systems of the present invention may include one or more fuel injectors. For example, a system may include a secondary fuel injector upstream of an oxidation catalyst. Any suitable type of fuel injector may be used in systems of the present invention.

Embodiments/Systems

Systems of the present invention may include: (1) a particulate filter including an inlet and an outlet with an axial length L therebetween, wherein the filter includes an oxidation catalyst capable of generating $NO_2$ under lean burn conditions; (2) an injector for injecting ammonia or a compound decomposable to ammonia into the exhaust gas, located downstream of the filter; and (3) a downstream catalyst comprising a selective catalytic reduction (SCR) catalyst, located downstream of the injector. In some embodiments, the filter may further comprise a TWC or an LNT catalyst.

In some embodiments, the system includes an upstream catalyst, comprising a second three-way catalyst, a $NO_x$ storage catalyst, a three-way $NO_x$ trap (TWLNT) catalyst, or combinations thereof. The upstream catalyst can remove some or all of the HCs which would otherwise inhibit the $NO \rightarrow NO_2$ reaction. Thus, the effectiveness of the oxidation catalyst can be greatly enhanced when it is located directly behind the upstream catalyst.

In some embodiments, the TWC or the LNT catalyst and the oxidation catalyst are configured on the filter such that the exhaust gas contacts the TWC or the LNT catalyst before contacting the oxidation catalyst. In some embodiments, the oxidation catalyst is coated on the outlet of the filter. In some embodiments, the TWC or the LNT catalyst is coated on the inlet of the filter.

Methods

A method of purifying exhaust gas from a lean burn combustion engine, comprising: (1) passing the exhaust gas through a particulate filter including an inlet and an outlet with an axial length L therebetween, wherein the filter includes an oxidation catalyst capable of generating NO2 under lean burn conditions; (2) adding ammonia or a compound decomposable into ammonia into the exhaust gas by an injector, located downstream of the filter; and (3) passing the exhaust gas through a downstream catalyst comprising a selective reduction catalyst, located downstream of the injector.

In some embodiments, the oxidation catalyst on the filter may be formulated and configured to provide a desired $NO_2/NO_x$ ratio in order to optimize the SCR reaction over the downstream SCR catalyst. In some embodiments, the exhaust gas exiting the filter with the SCR catalyst and oxidation catalyst has a $NO_2/NO_x$ ratio of more than 10%; preferably, at least 15%; more preferably at least 20%. In some embodiments, the exhaust gas exiting the filter with the oxidation catalyst has a $NO_2/NO_x$ ratio of 10% to 70%; preferably, 15% to 65%; more preferably, 20% to 60%. In some embodiments, the exhaust gas exiting the filter with the oxidation catalyst has a $NO_2/NO_x$ ratio of 15%-40% or 25% to 35%. In some embodiments, the exhaust gas exiting the filter with the oxidation catalyst has a $NO_2/NO_x$ ratio of 40%-70% or 40% to 60%.

Benefits

Configurations of the system of the present invention have been found to provide lower overall tailpipe emissions. In embodiments of the present invention, the oxidation catalyst on the particulate filter may provide a benefit by making $NO_2$ to optimize the performance of the downstream SCR catalyst. Generally, the $NO_2/NO_x$ ratio of the exhaust stream exiting a particulate filter may be very low (*e.g.,* less than 10%), while the SCR reaction is best performed with a $NO_2/NO_x$ ratio of about 50%. In systems of the present invention, the oxidation catalyst on the particulate filter may oxidize the $NO_x$ on the filter into $NO_2$, in order to obtain a more favorable $NO_2/NO_x$ ratio, and thereby enhance the performance of the downstream SCR catalyst.

It has also been found that the inclusion of the reductant injector is necessary to realize these benefits, in order to supply the reductant necessary for the SCR reaction on the downstream SCR catalyst.

Examples

GPF 1

A reference coated GPF was prepared by applying a current state of art TWC coating developed for GPF substrate. The washcoat loading was prepared at 1.6 $g/in^3$ (1.2 $g/in^3$ CeZr mixed oxide and 0.4 $g/in^3$ alumina) and the PGM loading 30 $g/ft^3$ (Pt:Pd:Rh, 0:25:5). Both the OSC component and alumina component have a D90 of ~7 $\mu$m.

The completed washcoat was adjusted to a suitable final washcoat solids content in order to coat onto the GPF substrate using Johnson Matthey's precision coating process described in WO 99/47260. The substrate used was a commercially available cordierite GPF substrate of a nominal 63% porosity and 17.5 $\mu$m mean pore size and of dimensions 4.66 inch diameter by 6 inch in length, 300 cells per square inch and a channel wall thickness of 8 thousandths of an inch. The coating was applied from each end of the substrate with each application covering a length between 50 and 65% of to achieve a fully coated final product with no uncoated region. The coated part was then dried and calcined in the normal way known to the art.

GPF 2

A three way catalyst washcoat was prepared at a washcoat loading of 1.6 $g/in^3$ (1.2 $g/in^3$ CeZr mixed oxide and 0.4 $g/in^3$ alumina) and a PGM loading of 30 $g/ft^3$ (Pt:Pd:Rh, 0:25:5): comprised of a Rare Earth Oxide (REO) Oxygen Storage Component (OSC) (weight ratio of $ZrO_2$ to $CeO_2$ is about 2:1) with a D90 of <1 $\mu$m and an La-stabilized alumina component which was wet milled to a D90 of 5 $\mu$m.

The completed washcoat was adjusted to a suitable final washcoat solids content in order to coat onto the GPF substrate using Johnson Matthey's precision coating process described in WO 99/47260. The substrate used was a commercially available cordierite GPF substrate of a nominal 63% porosity and 17.5 $\mu$m mean pore size and of dimensions 4.66 inch diameter by 6 inch in length, 300 cells per square inch and a channel wall thickness of 8 thousandths of an inch. The coating was applied from each end of the substrate with each application covering a length between 50 and 65% of to achieve a fully coated final product with no uncoated region. The coated part was then dried and calcined in the normal way known to the art.

GPF 3

GPF 3 was prepared in the same way as GPF 2 but the alumina component was wet milled to a D90 of 12 $\mu$m.

Performance Evaluation - Filtration and Backpressure

The above examples (GPFs 1-3) were evaluated for particulate emissions and specifically those between 10-23 nm. The evaluation was carried out over a World-Harmonized Light-Duty Test Cycle (WLTC) performed on a chassis dynamometer using a 2.0L turbocharged direct-injection Eu6b vehicle. The particles at diameters of 10-23 nm were assessed using measurements from the Cambustion DMS500, whilst the Horiba SPCS was used to consider the legislative range of 23 nm and above.

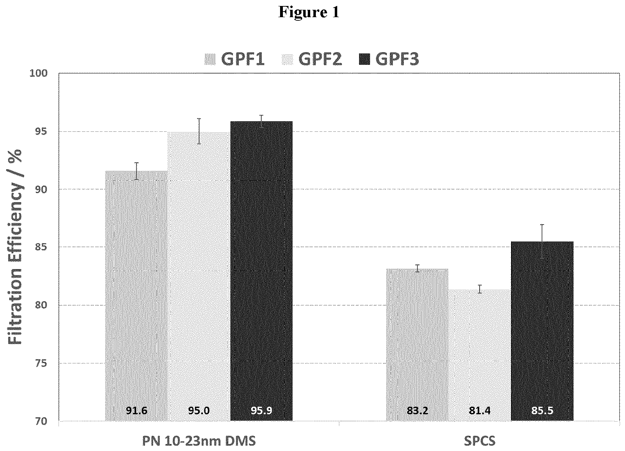

The results are shown in **Figure 1** and an average of 3 WLTC tests completed for each example. All three formulations show higher filtration efficiencies at 10-23 nm compared with 23 nm+, likely due to the dominance of the diffusion filtration mechanism at smaller particle sizes. However, both GPF 2 and GPF 3 show an improvement in filtration efficiency at 10-23 nm, with GPF 3 showing the best overall filtration efficiency at all particle sizes. GPF 3 was also shown to demonstrate favourable back-pressure characteristics compared with GPF 1, as which is desirable for enabling the engine to deliver peak power and optimised driveability.

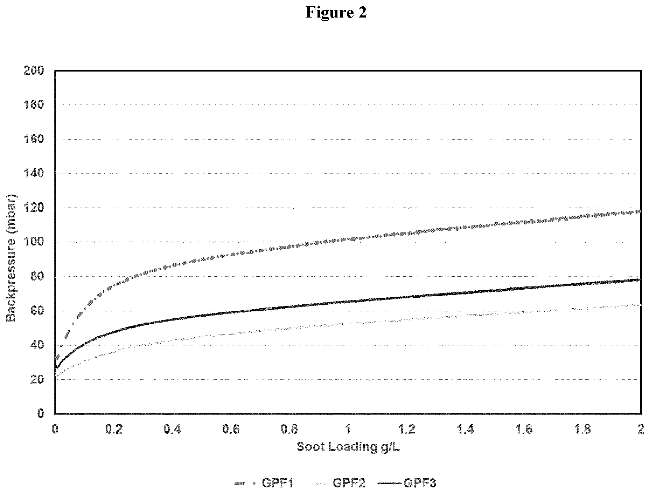

This is demonstrated in **Figure 2** which shows backpressure for the three formulations as a function of soot-load, measured on a Cambustion DPG (diesel particulate generator). GPF 3 was hence chosen to incorporate the oxidation zone.

$NO_2$-make Evaluation

Catalyst 1

A three-way $NO_x$ trap catalyst washcoat was prepared at a total washcoat loading of 4.9 $g/in^3$, comprising two layers: a bottom layer with a washcoat loading of 3.4 $g/in^3$ (a $MgO/Al_2O_3$ spinel fired with $CeO_2$, with a Ba dopant); a top layer with a washcoat loading of 1.5 $g/in^3$ (0.5$g/in^3$ CeZr mixed oxide and 1$g/in^3$ alumina). A PGM loading of 130 $g/ft^3$ (Pt:Pd:Rh, 5:20:1) was used. It was applied to a flow-through substrate, 400 cells per square inch and a channel wall thickness of 4 thousandths of an inch. A sample of dimensions 1.38 inch diameter by 3 inch length was taken from the substrate for evaluation, and aged hydrothermally in an oven for 5 hours at a temperature of 1100°C in a gas mixture comprising by volume 10% $H_2O$, 10% $O_2$ and $N_2$ balance.

Catalyst 2

An oxidation catalyst washcoat was prepared at a washcoat loading of 1.0 $g/in^3$ (1.0 $g/in^3$ alumina) and a PGM loading of 55 $g/ft^3$ (Pt:Pd:Rh, 10:1:0): using an La-stabilized alumina component which was wet milled to a D90 of 12 $\mu$m. It was applied to a flow-through substrate, 400 cells per square inch and a channel wall thickness of 4 thousandths of an inch. A sample of dimensions 1.38 inch diameter by 3 inch length was taken from the substrate for evaluation, and aged hydrothermally in an oven for 4 hours at a temperature of 980°C in a gas mixture comprising by volume 10% $H_2O$, 2% $O_2$ and $N_2$ balance.

Catalyst 3

Catalyst 3 was formed by placing the inlet face of Catalyst 2 behind and in direct contact with the outlet face of Catalyst 1, thus forming a single catalyst volume of dimensions 1.38 inch diameter by 6 inch length

The $NO_2$ make of the various catalysts were evaluated on a synthetic gas rig, using a furnace and a mixture of cylinder gases to simulate typical exhaust conditions for a lean-burn gasoline application. The sample inlet conditions set a $NO_2$:total $NO_x$ ratio of 0.2, and the $NO_2$:total $NO_x$ ratio at outlet was measured across a range of temperatures using the same gas mix at a flow rate of 48.9 slpm.

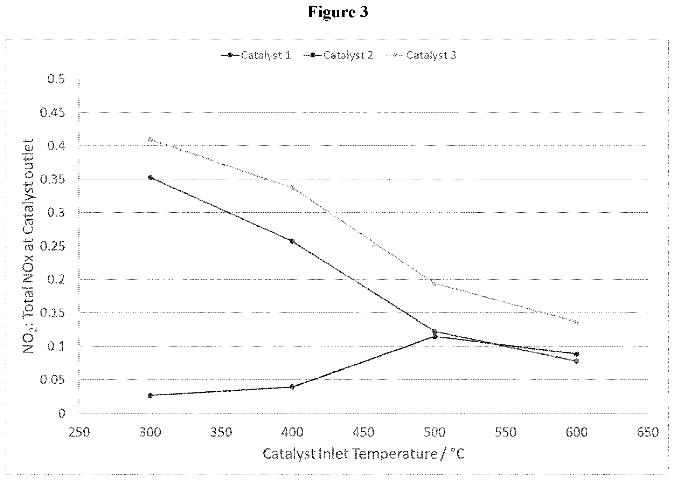

**Figure 3** shows the measured $NO_2$:total $NO_x$ ratio at outlet for the three configurations across a range of temperatures. The results show that whilst Catalyst 1 on its own significantly reduces the $NO_2$:total $NO_x$ ratio relative to inlet, Catalyst 2 increases the $NO_2$:total $NO_x$ ratio relative to inlet at certain temperatures. However, the effectiveness of the oxidation catalyst is greatly enhanced when it is located directly behind the three-way NOx trap sample, as demonstrated by Catalyst 3; this behaviour is attributed to the removal of HCs by the three-way NOx trap which would otherwise inhibit the $NO_2$-make reaction. Note that at higher temperatures, the ability to make and retain $NO_2$ is limited by reaction equilibrium.

GPF 4

GPF 4 was prepared using two distinct washcoats - washcoat 1 was the same TWC washcoat used in GPF 3.

A 2nd, oxidation catalyst washcoat was prepared at a washcoat loading of 1.0 $g/in^3$ (1.0 $g/in^3$ alumina) and a PGM loading of 55 $g/ft^3$ (Pt:Pd:Rh, 10:1:0): using an La-stabilized alumina component which was wet milled to a D90 of 12 $\mu$m.

The completed washcoats were adjusted to a suitable final washcoat solids content in order to coat onto the GPF substrate using Johnson Matthey's precision coating process described in WO 99/47260. The substrate used was a commercially available cordierite GPF substrate of a nominal 63% porosity and 17.5 $\mu$m mean pore size and of dimensions 4.66 inch diameter by 6 inch in length, 300 cells per square inch and a channel wall thickness of 8 thousandths of an inch.

The TWC washcoat was applied from the inlet, covering a length between 50 and 65%. And the oxidation catalyst washcoat was applied from the outlet, covering a length between 50 and 65%. This achieved a fully coated final product with no uncoated region. The coated part was then dried and calcined in the normal way known to the art.

Filtration Performance Evaluation - GPF 4

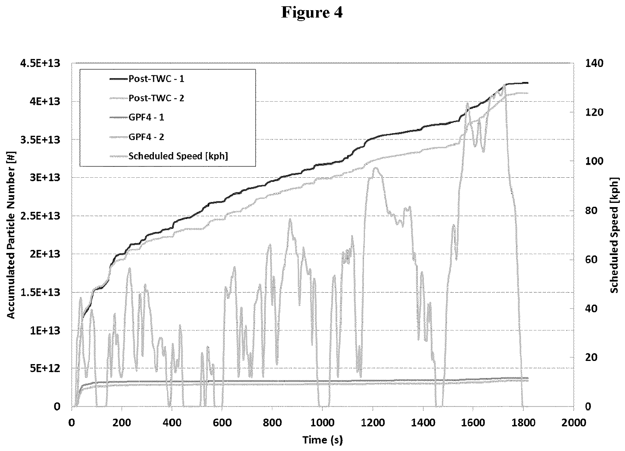

The filtration efficiency of GPF 4 was evaluated on the chassis dynamometer on the same 2.0L turbocharged direct-injection Eu6b vehicle test as above. The second-by-second PN measurements pre- and post-GPF as measured by the Horiba SPCS are shown in **Figure 4,** where the numbers "1" and "2" denote repeat tests. The new GPF design (GPF 4) demonstrated promisingly high filtration efficiency (~90%).

$NO_2$-make Evaluation- GPF 4

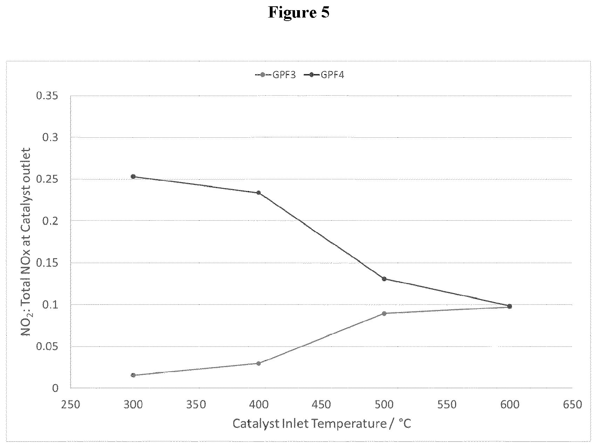

The $NO_2$-make performance of the oxidation catalyst washcoat when applied partially to a GPF substrate was validated by taking a sample from a GPF 4 part of dimensions 1.38 inch diameter by 6 inch length. A sampled of equivalent dimensions was taken from a GPF 3 part for reference. Both samples were aged hydrothermally in an oven for 4 hours at a temperature of 980°C in a gas mixture comprising by volume 10% $H_2O$, 2% $O_2$ and $N_2$ balance, and then evaluated on the synthetic gas rig under the same experimental conditions at the previous experiments on the flow-through samples (Catalysts 1-3), but due to limitations in the maximum length of sample that could be tested, both samples were evaluated individually with no preceding three-way $NO_x$ trap sample. **Figure 5** compares the measured $NO_2$:total $NO_x$ ratio at outlet for the GPF 3 and GPF 4 samples, and clearly demonstrates the improvement in $NO_2$:total $NO_x$ at outlet achieved with the GPF 4 design; it is expected that this improvement would be further enhanced by the inclusion of a three-way catalyst volume of some description (as an upstream catalyst) upstream of the GPF sample.

As used in this specification and the appended claims, the singular forms "a", "an" and "the" include plural referents unless the context clearly indicates otherwise. Thus, for example, reference to "a catalyst" includes a mixture of two or more catalysts, and the like.

The term "support" means the material to which a catalyst is fixed.

The term "calcine", or "calcination", means heating the material in air or oxygen. This definition is consistent with the IUPAC definition of calcination. (IUPAC. Compendium of Chemical Terminology, 2nd ed. (the "Gold Book"). Compiled by A. D. McNaught and A. Wilkinson. Blackwell Scientific Publications, Oxford (1997). XML on-line corrected version: http://goldbook.iupac.org (2006-) created by M. Nic, J. Jirat, B. Kosata; updates compiled by A. Jenkins. ISBN 0-9678550-9-8. doi:10.1351/ goldbook.) Calcination is performed to decompose a metal salt and promote the exchange of metal ions within the catalyst and also to adhere the catalyst to a substrate. The temperatures used in calcination depend upon the components in the material to be calcined and generally are between about 400 °C to about 900 °C for approximately 1 to 8 hours. In some cases, calcination can be performed up to a temperature of about 1200 °C. In applications involving the processes described herein, calcinations are generally performed at temperatures from about 400 °C to about 700 °C for approximately 1 to 8 hours, preferably at temperatures from about 400 °C to about 650 °C for approximately 1 to 4 hours.

When a range, or ranges, for various numerical elements are provided, the range, or ranges, can include the values, unless otherwise specified.

The terms "$NO_x$ absorber", "PNA" (passive NOx adsorber), "cold-start catalyst" (CSC), "lean $NO_x$ trap" (LNT), and "three-way catalyst" (TWC) are well known terms in the art used to describe various types of catalysts used to treat exhaust gases from combustion processes.

The term "platinum group metal" or "PGM" refers to platinum, palladium, ruthenium, rhodium, osmium and iridium. The platinum group metals are preferably platinum, palladium, ruthenium or rhodium.

The terms "downstream" and "upstream" describe the orientation of a catalyst or substrate where the flow of exhaust gas is from the inlet end to the outlet end of the substrate or article.

**Claims**

1. A system for treating exhaust gas from a lean-burn combustion engine comprising:

   a. a particulate filter including an inlet and an outlet with an axial length L therebetween, wherein the filter includes an oxidation catalyst capable of generating $NO_2$ under lean burn conditions;

b. an injector for injecting ammonia or a compound decomposable to ammonia into the exhaust gas, located downstream of the filter; and

c. a downstream catalyst comprising a selective catalytic reduction (SCR) catalyst, located downstream of the injector.

2. The system of claim 1, wherein the oxidation catalyst is coated on the outlet of the filter.

3. The system of any one of the preceding claims, wherein the filter further comprises a three-way catalyst (TWC) or a lean $NO_x$ trap (LNT) catalyst.

4. The system of claim 3, wherein the TWC or the LNT catalyst is coated on the inlet of the filter.

5. The system of any one of the preceding claims, wherein the exhaust gas entering the downstream catalyst has a $NO_2$:$NO_x$ ratio of more than 10%.

6. The system of any one of the preceding claims, wherein the lean-burn combustion engine is a lean-burn gasoline engine.

7. The system of claim 6, wherein the particulate filter is a gasoline particulate filter (GPF).

8. The system of any one of the preceding claims, further comprising an upstream catalyst located upstream of the filter, the upstream catalyst comprising a second three-way catalyst, a $NO_x$ storage catalyst, a three-way $NO_x$ trap (TWLNT) catalyst, or combinations thereof.

9. The system of claim 8, wherein the upstream catalyst is coated onto an electrically-heated catalyst (EHC).

10. A method of purifying exhaust gas from a lean burn combustion engine, comprising:

a. passing the exhaust gas through a particulate filter including an inlet and an outlet with an axial length L therebetween, wherein the filter includes an oxidation catalyst capable of generating $NO_2$ under lean burn conditions;

b. adding ammonia or a compound decomposable into ammonia into the exhaust gas by an injector, located downstream of the filter; and

c. passing the exhaust gas through a downstream catalyst comprising a selective reduction catalyst, located downstream of the injector.

11. The method of claim 10, wherein the oxidation catalyst is coated on the outlet of the filter.

12. The method of claim 10 or claim 11, wherein the filter further comprises a three-way catalyst (TWC) or a lean $NO_x$ trap (LNT) catalyst.

13. The system of claim 12, wherein the TWC or the LNT catalyst is coated on the inlet of the filter.

14. The method of any one of claims 10-13, wherein the exhaust gas entering the downstream catalyst has a $NO_2$:$NO_x$ ratio of more than 10%.

15. The method of any one of claims 10-14, further comprising an upstream catalyst located upstream of the filter, the upstream catalyst comprising a second TWC catalyst, a $NO_x$ storage catalyst, a three-way $NO_x$ trap (TWLNT) catalyst, or combinations thereof.

16. The method of claim 15, wherein the upstream catalyst is coated onto an electrically-heated catalyst (EHC).

## Figure 1

**Figure 2**

**Figure 3**

Figure 4

Figure 5

Europäisches
Patentamt

European
Patent Office

Office européen
des brevets

# EUROPEAN SEARCH REPORT

**Application Number**

EP 20 17 4590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/047170 A1 (JOHNSON MATTHEY PLC [GB]; COULSON JOANNE ELIZABETH [GB] ET AL.) 24 April 2008 (2008-04-24) * page 6, lines 24-34; figure 2 * * page 8, lines 21-34 * * page 11, lines 14-31 * * page 12, line 9 - page 13, line 10 * * page 15, line 31 - page 16, line 19 * | 1-16 | INV. B01D53/94 |
| X | EP 2 597 279 A1 (DEUTZ AG [DE]) 29 May 2013 (2013-05-29) * paragraphs [0001], [0008], [0009], [0013], [0014], [0023] - [0025]; figure 3b * | 1-16 | |
| X | WO 2014/068321 A1 (JOHNSON MATTHEY PLC [GB]) 8 May 2014 (2014-05-08) * page 7, line 27 - page 9, line 2; figure 3 * * page 11, lines 16-22 * * page 13, line 23 - page 14, line 2 * * page 16, line 7 - page 20, line 24 * | 1-16 | |
| X | EP 2 292 316 A1 (HYUNDAI MOTOR CO LTD [KR]) 9 March 2011 (2011-03-09) * paragraphs [0011] - [0013], [0027] * | 1-16 | TECHNICAL FIELDS SEARCHED (IPC) B01D F01N |
| X | WO 2009/076574 A2 (BASF CATALYSTS LLC [US]; HALLSTROM A KEVIN [US] ET AL.) 18 June 2009 (2009-06-18) * paragraphs [0014] - [0017], [0050], [0069], [0088]; figures 1,4 * | 1-16 | |
| A | US 2018/021768 A1 (CHANDLER GUY [GB] ET AL) 25 January 2018 (2018-01-25) * paragraphs [0001], [0036], [0040] - [0042], [0047] - [0049], [0052]; figure 3 * | 1-16 | |

The present search report has been drawn up for all claims

| Place of search | Date of completion of the search | Examiner |
|---|---|---|
| The Hague | 3 September 2020 | Howe, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 4590

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2020

| Patent document cited in search report | | Publication date | Patent family member(s) | | Publication date |
|---|---|---|---|---|---|
| WO 2008047170 | A1 | 24-04-2008 | AT | 475472 T | 15-08-2010 |
| | | | BR | PI0717470 A2 | 08-07-2014 |
| | | | CN | 101594925 A | 02-12-2009 |
| | | | EP | 2081665 A1 | 29-07-2009 |
| | | | JP | 5523104 B2 | 18-06-2014 |
| | | | JP | 2010507480 A | 11-03-2010 |
| | | | KR | 20090082225 A | 29-07-2009 |
| | | | RU | 2009118911 A | 27-11-2010 |
| | | | US | 2011274606 A1 | 10-11-2011 |
| | | | WO | 2008047170 A1 | 24-04-2008 |
| EP 2597279 | A1 | 29-05-2013 | EP | 2597279 A1 | 29-05-2013 |
| | | | US | 2015283507 A1 | 08-10-2015 |
| | | | WO | 2013075803 A1 | 30-05-2013 |
| WO 2014068321 | A1 | 08-05-2014 | BR | 112015009514 A2 | 04-07-2017 |
| | | | CN | 104838099 A | 12-08-2015 |
| | | | DE | 112013000180 T5 | 07-08-2014 |
| | | | EP | 2917521 A1 | 16-09-2015 |
| | | | GB | 2510022 A | 23-07-2014 |
| | | | JP | 6416098 B2 | 31-10-2018 |
| | | | JP | 2016500566 A | 14-01-2016 |
| | | | KR | 20150079869 A | 08-07-2015 |
| | | | RU | 2015120598 A | 20-12-2016 |
| | | | US | 2014161693 A1 | 12-06-2014 |
| | | | WO | 2014068321 A1 | 08-05-2014 |
| EP 2292316 | A1 | 09-03-2011 | CN | 102003251 A | 06-04-2011 |
| | | | EP | 2292316 A1 | 09-03-2011 |
| | | | JP | 2011052679 A | 17-03-2011 |
| | | | KR | 20110024599 A | 09-03-2011 |
| | | | US | 2011047989 A1 | 03-03-2011 |
| WO 2009076574 | A2 | 18-06-2009 | AR | 069684 A1 | 10-02-2010 |
| | | | BR | PI0820803 A2 | 16-06-2015 |
| | | | CN | 101918112 A | 15-12-2010 |
| | | | EP | 2231311 A2 | 29-09-2010 |
| | | | EP | 3409345 A1 | 05-12-2018 |
| | | | JP | 5487453 B2 | 07-05-2014 |
| | | | JP | 5814333 B2 | 17-11-2015 |
| | | | JP | 2011506827 A | 03-03-2011 |
| | | | JP | 2014080979 A | 08-05-2014 |
| | | | KR | 20100101143 A | 16-09-2010 |
| | | | PL | 2231311 T3 | 28-02-2019 |
| | | | US | 2009158719 A1 | 25-06-2009 |
| | | | WO | 2009076574 A2 | 18-06-2009 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 20 17 4590

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2020

| Patent document cited in search report | Publication date | Patent family member(s) | Publication date |
|---|---|---|---|
| US 2018021768 A1 | 25-01-2018 | BR 112019000978 A2 | 14-05-2019 |
| | | CN 109475804 A | 15-03-2019 |
| | | DE 102017116461 A1 | 25-01-2018 |
| | | EP 3487604 A1 | 29-05-2019 |
| | | GB 2554517 A | 04-04-2018 |
| | | JP 2019529067 A | 17-10-2019 |
| | | KR 20190036543 A | 04-04-2019 |
| | | RU 2019104306 A | 24-08-2020 |
| | | US 2018021768 A1 | 25-01-2018 |
| | | WO 2018015930 A1 | 25-01-2018 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0116050 A
- US 20150158019 A

- WO 2015085300 A
- WO 9947260 A

**Non-patent literature cited in the description**

- *Pure & Appl. Chem.,* 1994, vol. 66 (8), 1739-1758
- IUPAC. Compendium of Chemical Terminology. Blackwell Scientific Publications, 1997

- **M. NIC, J. JIRAT ; B. KOSATA.** XML on-line corrected version. 2006